# EUROPEAN PATENT APPLICATION

(11) **EP 3 404 004 A1**
(43) Date of publication of application: **21.11.2018**
(21) Application number: 18173361.9
(22) Date of filing: 18.05.2018
(51) Int. Cl.: C05C 1/00, C05C 1/02, C01C 1/24, C01C 1/18

(54) **METHOD FOR OBTAINING GRANULAR NITROGEN-SULPHUR FERTILISERS AND APPARATUS TO CARRY OUT THIS METHOD**

(30) Priority: 18.05.2017 CZ 20170279
(71) Applicant: Lovochemie, A.S., 41002 Lovosice (CZ)
(72) Inventor: JANDL, Jan, 41201 Michalovice (CZ); HUBI KA, Martin, 16300 Praha 6 - epy (CZ); KU ERA, Milan, 84102 Bratislava (SK); KRÁLÍK, Milan, 84102 Bratislava (SK); FOLTINOVI , Tomá, 92601 Sere (SK)
(74) Representative: Kratochvil, Vaclav

(57) **Abstract**

The invention relates to the method of nitrogen-sulphur granular fertilizer formulation from ammonium nitrate, ammonium sulphate and/or aluminium ammonium sulphate and/or aluminium sulphate, sulphuric acid, and ammonia, wherein a slurry is formed first from the mentioned components and, then, this slurry is granulated with a recycle and other inorganic components directly and/or after thickening at a temperature of 70 to 130 °C. In a continuous forced-mixing reactor of power of 1.5 to 25 kW/m³; such slurry features the pH of 6.1 to 7.5 at the reactor output and the ratio of ammonium nitrate to ammonium sulphate 1.1 to 1.75 at the reactor output. For the mentioned method, the equipment comprising a mixing tank (1), to which a reactor (2) is connected, followed by a thickener (6) is used, wherein the reactor (2) is provided with a propeller and/or turbine stirrer.

## Description

### Technical Field

The present invention relates to a nitrogen-sulphur fertiliser prepared from raw materials containing nitrate, ammonia, sulphate or sulphate-aluminium compounds, a method for its formulation, and an equipment for performing this method.

### Background of the Invention

Nitrogen-sulphur solid fertilisers have been systematically used since the mid-twentieth century (Ullman's encyclopedia). Basically, the sulphur as well as magnesium and calcium are macro elements. It has also been shown that liming increases sulphur washing out (BOLAN *et al. cited in* ERIKSEN *et al*., 1998) due to sulphate desorption and increased mineralization. Last but not least, the sulphate adsorption is affected by the presence of other anions. The strength of anion adsorption in soils is described in the following sequence: OH⁻ > PO₄³⁻ > SO₄²⁻ > NO₃⁻ = Cl⁻ (TISDALE *et al. cited in* ERIKSEN *et al*., 1998). Although the adsorbed sulphates play only a marginal role in the direct plant nutrition by sulphur, they may be of considerable importance for stable sulphur balance throughout the agroecosystem (ERIKSEN *et al*., 1998).

For the solid - granular, extruded, or prilled - fertilisers, the combination of urea and ammonium sulphate (US 3,785,796 - 1974, US 4,943,308 - 1990, EP 1,248,752, A0 - 2004) and the combination of ammonium nitrate and ammonium sulphate (GB 356,759 - 1931, GB 357,396 - 1931, GB 397, 532 - 1933, GB 413,863 - 1933, US 3,282,674 - 1966, US 2002/0095966 A1, EP 1,595,860 A2 - 2005, US 8,623,315 B2 - 2014) are the most commonly used. An interesting technological solution is represented by a circulating reactor disclosed in the U.S. 4,308,049, in which the authors describe the preparation of nitrogen, nitrogen-phosphate or nitrogen-phosphate calcium fertilisers by reacting an acidic reaction mixture with gaseous ammonia. This patent, however, does not give examples or conditions for the formulation of ammonium-sulphate-nitrate fertilisers, including, in particular, the pH value and the ratio of ammonium nitrate and ammonium sulphate.

The ammonium-sulphate-nitrate fertilisers are usually formulated from ammonium nitrate and ammonium sulphate or ammonium nitrate, sulfuric acid, and ammonia, or by the use of other sulphates, such as FeSO₄, MgSO₄, Al₂(SO₄)₃. The ammonium-sulphate-nitrate fertiliser formulation is based on the use of double salt formation, especially 2NH₄NO₃x(NH₄)₂SO₄ (2DASA) and 3NH₄NO₃x(NH₄)₂SO₄ (3DASA) (Gmellin - citation). The oldest procedures (GB 356,759 - 1931, GB 357,396 - 1931, GB 397,532 - 1933, GB 413,863 - 1933) employ reaction of ammonia and nitric acid and sulfuric acid, optionally a combination of ammonium nitrate and ammonium sulphate. A two-step process was employed to react the ammonia with acids and concentrate the slurry, where the ammonia was reacted first, wherein the reaction mixture temperature was increased and the excess water was evaporated under reduced pressure and the reaction mixture temperature was reduced. There are no details in the patents, such as pH control. Further processes were carried out by stirring the sulphate components and NH₄NO₃ at temperatures above 160°C - US 3,282,674-1966, US 2002/0095966 A1. EP 1,595,860 A2 discloses a process working at temperature of 120°C as maximum, wherein a slurry is prepared first; its composition is close to 2DASA; then, (NH₄)₂SO₄ is added to the slurry in a next reactor, a small amount of (NH₄)₂SO₄ can be added during granulation. This produces a fertiliser containing about 26% (wt.) of nitrogen and 13 to 14% (wt.) of sulphur. A disadvantage of this process is the need for two-step slurry preparation and the properties sensitivity to the crystalline ammonium sulphate quality.

The UHDE brochure, Nitrate fertilizers, UHDE ThyssenKrupp, April 23, 2009, discloses formulation of the fertiliser of 2NH₄NO₃x(NH₄)₂SO₄, (2DASA) from nitric acid, sulphuric acid, ammonia and auxiliary components (FeSO₄, Al₂(SO₄)₃) with the possibility of adding the crystalline ammonium sulphate. According to this brochure, the resulting fertilizer composition is 26% of nitrogen and 14% of sulphur. It should be noted that for the above-mentioned 2DASA, the nitrogen content is 28.75% and the sulphur content is 10.97%. According to the UHDE procedure, approximately 85% aqueous solution of ammonium nitrate is sprayed together with sulfuric acid and ammonia into a saturator reactor, wherein the reaction heat is removed by water evaporation to obtain a reaction mixture - a slurry suitable for granulation. The temperature in the reactor, i.e. of the slurry at a granulator input, is approximately 160 °C. Since the temperature of about 100 °C is required for good granulation, relatively large amount of recycle is necessary to be used, i.e. a recycling ratio higher than 3, with low temperature, resulting in the mechanical stress when meltage solidifying and the deterioration of granulate mechanical properties.

Information on the uranium mining consequences in the Czech Republic (formerly Czechoslovak Republic) is also required to describe the prior art. The uranium started to be mined near Stráž pod Ralskem in 1967, 15,000 tonnes was obtained, and the mining was stopped in 1996. During the mining, five million tonnes of sulphuric acid and other chemicals were pushed into the mine. The uranium ore was dissolved in these chemicals in order to the miners can get it to the surface. An artificially formed chemical mixture having contaminated 260 million cubic meters of groundwater has remained underground. In the North-Bohemian Cretaceous Basin, the largest drinking water supplies in the Czech Republic are still at risk. Consequently, contaminated solutions were left no other alternative but being drained and reprocessed to harmless products. According to plans, recovery of this territory will continue until 2040 - T. Rychtařík from DIAMO, 20050505. One of the remedies used is the pumping of contaminated solutions from the underground and their thickening by evaporation. At this time, alum - double ammonium aluminium sulphate - (NH₄)Al(SO₄)₂.12H₂O crystallizes. CAS's scientists Jana Bludská et al. IIC CAS, 2005 have offered two methods of its use: (i) produce a fertilizer and also (ii) obtain a ceramic material. Priority has been given to the fertiliser and it has been named Lovodasa 25-10, where the first and the second number expresses the percentage of nitrogen and sulphur, respectively. This fertiliser has been intended for production in Lovochemia, a.s., in Lovosice. Experts from the Czech University of Life Sciences in Prague have confirmed that Lovodasa is an equivalent to similar commercial fertilisers. It has neither toxic nor radioactive undesirable side effects. However, due to the aluminium content, it should not be used in highly acidic soils where this element would be released. Area of such soils in the Czech Republic and Europe is only small. Therefore, the solidification of aluminium into its insoluble form at a pH greater than 4.5 is a key aspect of the formulation of fertilisers containing sulphates and water-soluble aluminium in the form of Al (3+) cations. This procedure is disclosed in the CZ 293085 "Method for the fertilisers formulation from materials containing aluminium" by M. Markvart, K. Jirátová, P. Matoušek, and M. Soukup. Later, the attention has been focused also to removing thallium, which is poisonous to both plants and animals, including humans. The solution is protected by patent: "Method of thallium removal from ammonium aluminium sulphate", CZ 300285", by: K. Jirátová, P. Matoušek, and M. Markvart),

However, technological experience has shown that the economically efficient process of aluminium sulphate salt conversion to poorly soluble aluminium compounds is more complex than is indicated in the CZ 293085 patent. Implementation of the batch production in operational scale - reactors of capacity in the order of units to tens of cubic meters - is inefficient and gel-like structures are formed often, complicating the process. The large-scale production of industrial fertilisers is to be carried out via a continuous method, and the process of nitrogen-sulphur granular fertiliser production described in the CZ 293085 proved to be unusable in practice.

The chemistry of aluminium compound change, especially of aluminium hydroxide, is well described in the monograph: Oxides and hydroxides of aluminium (K. Wefers, Ch. Misra, Alcoa Laboratories 1987). The lowest solubility of aluminium hydroxide (Al(OH)₃) is at pH 5 to 8. At lower pH, the [Al(OH)₂]⁺ cation is formed; at higher pH the [Al(OH)₄]⁻ anion is formed. The (Al(OH)₃), occurring in particular as gibbsite in nature, is inadequate to form a fertiliser with a low-soluble aluminium compound. The boehmite AIO(OH), which is formed by heating above 100 °C, is less soluble and the reaction proceeds more readily at a higher temperature, above 200 °C. The formation of aluminium hydroxide is usually through gelled structures which gradually increase their crystallinity with time and at higher temperatures (J. M. Rousseaux, P. Weisbecker, H. Muhr, and E. Plasari: Aging of Precipitated Amorphous Alumina Gel. Ind. Eng. Chem. Res. 2002, 41, 6059-6069). In terms of the insolubility of the aluminium compounds, aluminium oxide (Al₂O₃) is the most suitable, which has equilibrium temperature of 640 K with the boehmite, but this temperature is the most suitable for the pressure when water is liquid, i.e. 20 MPa. In a lower water activity environment, the conversion to aluminium oxide can take place even at a lower temperature to form a hydrated amorphous aluminium oxide (Al₂O₃.xH₂O).

Conversion of aluminium sulphate (Al₂(SO₄)₃) to insoluble Al(OH)SO₄ at temperature above 300 °C is described in U.S. 4394368 A - High temperature hydrolysis of aluminium sulphate solutions, D. E. Shanks.

Conversion of aluminium sulphate and ammonium aluminium sulphate (NH₄Al(SO₄)₂.12H₂O - ammonium aluminium alum, conversion of alum to ammonium sulphate is carried out most often with ammonia according to the stoichiometric equation:

Al₂(SO₄)₃ + 6 NH₄OH = 2Al(OH)₃ + 3 (NH₄)₂SO₄

NH₄Al(SO₄)₂ + 3 NH₄OH = Al(OH)₃ + 2 (NH₄)₂SO₄

The path of the alum conversion is more complex and can be described by equations:

NH₄Al(SO₄)₂ + NH₄OH → NH₄(NH₄)Al(OH)(SO₄)₂ + NH₄OH → NH₄(NH₄)₂Al(OH)₂(SO₄)₂ + NH₄OH → NH₄(NH₄)₃Al(OH)₃(SO₄)₂ → Al(OH)₃ + 2(NH₄)₂(SO₄)

If the ammonia concentration is increased too much, following reaction takes place as well:

Al(OH)₃ + NH₄OH → NH₄Al(OH)₄

The transformation of ammonium aluminium alum is complicated by the reaction:

NH₄(NH₄)Al(OH)(SO₄)₂ → (NH₄)₂(SO₄)₂ + Al(OH)(SO₄)

The alkaline aluminium sulphate Al(OH)(SO₄) is low soluble and, thus, reacts with ammonia reluctantly to aluminium hydroxide and aluminium sulphate. If this form remains in the resulting fertiliser, the solubility of the sulphate anions is reduced on the one hand; however, after dissolution, there is a danger of active aluminium cations, which, in their higher concentration, can enter the crops and have subsequently hazard effects for animals, on the other hand.

From the point of view of the rates of formation of ammonium sulphate from sulphuric acid and ammonia, which is in the gas phase or when converting ammonium aluminium sulphate, it is important to transport ammonia into the slurry, which is influenced by mixing intensity. The mixing intensity in laboratory apparatuses is evaluated by torque measurement and in large equipment by the power of the agitator motor or circulator pump, taking into account mechanical losses in the systems between the engine and the agitator or pumping element, most commonly through a circulating wheel. To ensure sufficient phase transport for multiphase forced-mixing systems, such as agitator or circulating mixing, values of 0.05 to 1 kW/m³ are indicated, for highly viscous mixtures up to 5 kW/m³ (Handbook of Industrial Mixing: Science and Practice, Edward L. Paul (Editor), Victor A. Atiemo-Obeng (Editor), Suzanne M. Kresta (Editor), ISBN: 978-0-471-26919-9, Wiley, 2003). If there is sufficient water in the reaction mixture and the pressure and temperature are favourable for its evaporation, part of the reaction heat is removed by water evaporation, which also contributes to the mixing of the reaction mixture - slurry. The formation of large aggregates of inorganic precipitates, which must be disintegrated by forced mixing, may represent a problem. In economically well-designed technology, the goal is to achieve the highest volume production of a quality slurry with minimal energy demands.

In order to complete the solid fertiliser production process, the wet mixture of ammonium nitrate, ammonium sulphate, and aluminium hydroxide is necessary to be dried and nearly calcined so that insoluble or poorly soluble aluminium compounds, namely boehmite (AIO(OH)) and amorphous hydrated aluminium oxide (Al₂O₃.xH₂O) are the dominant components. Ammonium nitrate and ammonium sulphate form double salts of 2NH₄NO₃.(NH₄)₂SO₄ and 3NH₄NO₃.(NH₄)₂SO₄ to stabilize the resulting granular fertiliser.

To sum up, it is necessary to have a technological process enabling the minimum requirements for mixing and transportability of the reaction mixture, especially in terms of equipment volume - expressed by dynamic viscosity and granulation, i.e. minimizing the recycling ratio to obtain mechanically stable, well storable and applicable fertilizer with the required nitrogen and sulphur content.

Although there is a range of knowledge describing the formation of 2DASA and 3DASA and the conversions of soluble aluminium compounds to insoluble ones, there is no theoretical apparatus enabling to derive a technologically economical process of a fertiliser formulation from aluminium sulphate and/or ammonium aluminium alum. The main reason is the existence of metastable states in nucleus and crystal formation, and it is not possible to unambiguously predict the influence of reaction conditions, including reactor arrangement and mixing intensity, on this process; and surprisingly positive results in terms of technology and product quality can be achieved under certain conditions.

In the technological process, the slurry viscosity used to prepare granular fertilisers and the properties of the resulting fertiliser are important parameters. The slurry viscosity is most often measured using Brookfield viscometers by rotating a spindle in the slurry to be measured and measuring the torque required to overcome the viscous resistance against induced, artificial, movement.

Fertiliser evaluation is based on chemical composition and mechanical properties. In general, the chemical composition is determined by the methodologies of the EU Directive 2003/2003.

Water content: Karl-Fischer titration method (2H₂O + SO₂ + I₂ → H₂SO₄ + 2HI), using a standardized Karl-Fisher solution of SO₂ and I₂ in organic base and methanol and the titration endpoint indication based on the colours of I₂.

N (total): Reduction of nitrates and nitrites to ammonia in a strongly alkaline environment using a metal alloy composed of 45% aluminium (Al), 5% zinc (Zn), and 50% copper (Cu) (Devarda's alloy). Ammonia distillation and its binding in a known volume of standard sulphuric acid solution; titration of the excess acid with a sodium or potassium hydroxide solution of a known titre.

N (NO3-): titration method. The nitric anion oxidises the ferrous cation (Fe2+) to the ferric cation, forming the nitric oxide (NO). The resulting yellow iron salt is bound by the addition of H3PO4 to a colourless complex and the excess ferrous sulphate solution is determined by titration with a KMnO4 of a known titre.

N (NH4+) Extraction of ammonia with excess sodium hydroxide; distillation, binding in a known volume of standard sulphuric acid solution; titration of the excess acid with a sodium or potassium hydroxide solution of a known titre.

The Ca and Mg content is determined by chelatometric method.

SO4 (2-): optical emission spectrometry using inductive plasma (OES ICP), or CNS elemental analysis, or by precipitation of BaCl2 - the gravimetric method.

Al (total): OES ICP or atomic absorption spectrophotometry (AAS).

Al (water soluble): OES ICP or AAS.

The sample preparation for total aluminium determination differs from the sample preparation for determination of water-soluble aluminium: for Al total, 1 g of sample is mixed with 30 ml of HCl in a ratio of 1 : 1 and simmered for 30 minutes from the boiling point. Then, it is rinsed down in a 500-ml volumetric flask and made up to the mark with demineralized water. In the case of remaining solid particles or grease, the suspension is filtered through a paper filter (white stripe) and measured. To determine water-soluble Al, 5 g of the sample is mixed with 400 ml of demineralized water and simmered for 15 minutes from the boiling point. Then, it is rinsed down in a 500-ml volumetric flask and made up to the mark with demineralized water. It is filtered through a filter paper (white stripe) to remove solids and any grease from the surfactant and measured.

Further features are listed below.

### Caking property

The method is based on measurement of force required to disrupt the fertiliser sample after its loading at pressure of 1.6 . 10⁵ Pa for 17 hours. A sample weighing about 1 kg is divided into 2 parts on a divider. One part is used to determine the caking property, the other one is used to determine the strength. Stainless steel moulds, inside diameter of 36 mm and height of 42 mm, placed on the stand equipped with weighs, are filled with a well-mixed sample up to 1 mm below the top edge, sealed into a PE bag and covered with a press plate, diameter of 31 mm and height of 4 mm with a steel ball of diameter of 9 mm. A 12.2 kg hinge with weigh is placed on the ball of the press plate, and the fertiliser is left for 17 hours at room temperature. The press plate must be laid in the mould centre so that the sample is loaded evenly, the hinges with the weighs must not touch each other. After 17 hours, the sample mould is placed in a scoring device frame under which the fertiliser tank is located. The penetration bar of the device, diameter of 6 mm, is inserted into centre of the sample, and the force (N) required to perforate the compressed sample is read on display. The determination is performed 3 times at once. As a result, the average of all three measurements is rounded to units of N. A quality nitrogen-sulphur fertiliser must have the caking property less than 10 N.

### Static strength

The method is based on determination of the limit force required to destroy the granules in uniaxial compression between two parallel surfaces. The collected sample of fertiliser weighing about 1 kg is divided into a 100 to 120 g samples using a divider; the samples are screened manually on sieves. For evaluation, 20 granules of 2.8 to 3.15 mm are selected to a closed weighing bottle. All collected granules are subjected to destruction on the TMZ 30U. A satisfactory fertiliser must have a static strength of more than 50 N.

### Dustiness

Dustiness was determined by measuring the sample using the DustMon L. The known amount of fertiliser sample falling into a collecting chamber is transilluminated by the radiation, intensity of which is recorded. The device evaluates the dustiness as "dust number", "dust area", and "peak in the dust area". The white light - visible - abbreviation WL - or laser - abbreviation L - can be used as the source of radiation. White light is used for granular fertilisers and the dust number is recorded. The analytical sample weight is 0.5 to 1 kg, homogeneous. If the sample is larger, it must be prepared by quartering into to a smaller weight. If it is inhomogeneous, or with a visible dust content, it will be prepared by quartering into weight to be measured. Homogeneous samples are used without quartering. The weighed sample, about 50 to 51 g, is poured into the device hopper. Measurement is started. The sample drops through the drop tube into a drawer at the device bottom. Measurement take place at the set time. The appropriate measurement curve is plotted on the display. Finally, the measurement results appear on the display. The so-called dust number is evaluated. For nitrogen-sulphur fertilizers, the values up to 3 are satisfactory.

The optimal process for the preparation of high-quality nitrogen-sulphur granular fertilisers can be achieved only by consistent and extensive experimental activities. The present invention discloses a method of efficiently production of a high-quality granular sulphate-nitrogen fertiliser from ammonium nitrate, various sulphate components, sulphuric acid, and ammonia, including ammonium aluminium sulphate.

### Summary of the Invention

The aforementioned drawbacks are largely eliminated by the method of nitrogen-sulphur granular fertilizer formulation from ammonium nitrate, ammonium sulphate and/or aluminium ammonium sulphate and/or aluminium sulphate, sulphuric acid, and ammonia, wherein a slurry is formed first from the mentioned components and, then, this slurry is granulated with a recycle and other inorganic components directly and/or after thickening at a temperature of 70 to 130 °C according to the present invention. It is based on a slurry formed in a continuous forced-mixing reactor of power of 1.5 to 25 kW/m³; such slurry features the pH of 6.1 to 7.5 at the reactor output and the ratio of ammonium nitrate to ammonium sulphate 1.1 to 1.75 at the reactor outlet.

Preferably, ammonia is dosed in excess and the unreacted ammonia, together with water vapour, is passed to an absorption column where it reacts with nitric acid and the resulting ammonium nitrate solution is fed as a feed to the reactor.

Preferably, the slurry at the reactor output has temperature of 100 to 130 °C, pH of 6.1 to 6.9 and a water content in the slurry at the reactor output is 4.5 to 20% (wt.).

In the preferred embodiment, a decomposition mixture formed by the reaction of nitric acid and magnesite and/or dolomite is used to prepare the slurry, wherein the weight portion of calcium and magnesium, expressed as CaO and MgO, is 3% (wt.) maximally in relation to the total content of inorganic compounds at the reactor output. The reaction mixture, which at the reactor outlet contains more than 9% (wt.) water, is thickened to a water content of 4.5 to 9% (wt.) by adding gaseous ammonia to the thickening device so that the slurry shows pH of 6.1 to 7.5 after thickening.

The granulation is preferably carried out at an output temperature of 80 to 100 °C, the composition of the recycled particles being in the range of 90 to 110% of the nitrogen, sulphur and other inorganic components in the raw materials and the product formed by the reaction of the individual components in the raw materials fed. Ground dolomite and/or limestone can be added to the granulation in addition to the recycle and slurry, the weight ratio of dolomite to limestone being 1:99 to 99:1, in maximum amount of 20% (wt.) in relation to the inorganic component content in the slurry.

The granulate is dried by a mixture of heated air of temperature of 160 to 320 °C, the granulate being dried by a mixture of gases prepared by hydrocarbon combustion, preferably natural gas, and the temperature is adjusted by dilution with air so that the input temperature of the gas mixture for drying is 240 to 320 °C.

Preferably, aluminium salts are used in the preparation to achieve a water-soluble aluminium content in the fertiliser less than 0.05% (wt.).

A further object of the invention is an equipment for performing the above process, comprising a mixing tank to which a reactor is connected, followed by a thickener, the reactor being provided with a propeller and/or turbine stirrer. Preferably, the reactor is an "O" circulating reactor with forced mixing by means of an axial pump, the raw material input being at the beginning of the upstream section of the reactor and the slurry output being at the downstream section of the reactor. The reactor may be provided with a centrifugal or screw pump for forced mixing by external recirculation.

As a result of the intensive mixing, the reactants react very quickly and, as illustrated by the examples, a slurry with very suitable rheological properties is formed under these conditions, which positively reflects in a viscosity reduction. For a batch layout or for mode with pH of less than 6, the viscosity of the slurry of the present invention decreases from 1000 mPa.s and above to 110-900 mPa.s. In addition to lighter transport and lower energy demands on mixing, the positive effect is reflected in better distribution of slurry droplets during granulation, thus contributing to more homogeneous and more compact granules. The granules so formed have higher mechanical strength, lower dustiness and lower tendency to get wet.

Water vapour and excess ammonia are fed to the exhaust-gas purification plant to which an aqueous solution of nitric acid is supplied. The most common type of such equipment is a packed tower. If the slurry water content is too high, above 9%, the slurry is thickened in another device. The thickening can be accomplished, for example, by circulating through a heat exchanger and a separator of vapours, which are fed to the exhaust-gas purification plant. A suitable slurry formulation for the granulation is achieved by maintaining the output pH of 6.1 to 7.5. This is achieved by adding small amount of ammonia to the equipment. The recycle forms a polydispersive particle system with a D50 of at most 2 mm and less than 1% (wt.) of particles larger than 3 mm.

Process of the invention provides a nitrogen-sulphur granular fertiliser having the composition:
N-total content of 22.5 to 27.0% (wt.) and S content = 9.5-13.5% (wt.), wherein the aluminium ammonium alum and the aluminium sulphate component have a water-soluble aluminium content of less than 0.05% (wt.).

Measurement of the slurries prepared according to the invention is carried out at temperature of 80-120 °C. For the purposes of comparison and as a quantity suitable to assess the transport slurry properties, the values at the spindle speed of 100 rpm were chosen. Viscosity values are usually reported in mPa.s, wherein a well-transportable slurry has a viscosity of less than 1000 mPa.s, preferably up to 500 mPa s.

### Explanation of drawings

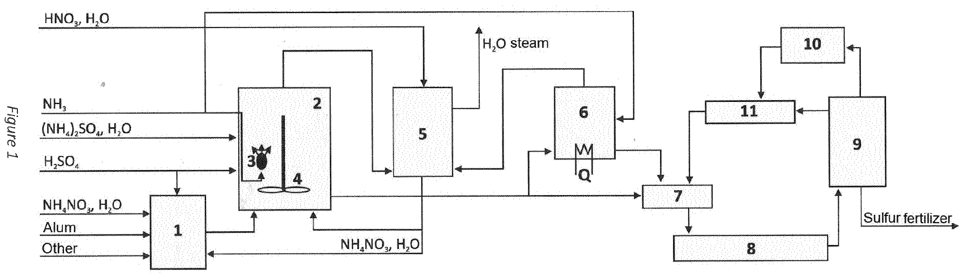

Now, the invention will be described in a specific example embodiment with reference to the accompanying drawings, where Figure 1 shows a schematic diagram of the equipment for the nitrogen-sulphur granular fertiliser formulation.

### Examples of the invention embodiments

### Example 1 - Inappropriate procedure

492 g of ammonium nitrate (98%), 570 g of alum of 97% purity, and 196 g of sulphuric acid (98%) were placed in a batch reactor with a stirrer. Under intensive stirring and heating at temperature of 100 to 130 °C, ammonia was driven into the reaction mixture through a distributor. Excess ammonia together with water vapour was conduct away to neutralize in a dilute nitric acid solution. pH development and the slurry condition were monitored. At pH 4.8, the whole mixture become gelled, virtually unmixable even at water content of 13% (wt.). This example illustrates the inappropriateness of the process resulting in state of formation of gelled structures of hydrated aluminium hydroxide.

### Example 2:

The slurry for a nitrogen-sulphur fertiliser containing aluminium was prepared in a flow-through reactor with a stirrer; capacity: 3 1. After the reactor was started with ammonia water, the mixture of ammonium nitrate - 719.2 g/h as pure NH₄NO₃, alum - 796 g/h, and water - 205 g/h started to be dosed from the heated intermediate tank; and concentrated sulphur acid (98% wt. - 270 g/h) is dosed from other tank. Gaseous ammonia was added through a distributor so that the pH at the reactor output was 6.1 to 6.5. The mixing power after the reactor run was stabilized was 19.6 kW/m³. Excess ammonia together with water vapour was conduct away to neutralize in a dilute nitric acid solution. The slurry at output was 130 °C and contained 7.8% (wt.) of water. The slurry viscosity was 780 mPa.s. Part of the accumulated slurry was dried, ground, sieved and the particle fraction with a maximum size of 2 mm was used as a recycle for granulation. Granulation in a double-spindle granulator at temperature of 90 °C provided a wet granulate which was dried using hot air of temperature of 260 °C. From the obtained granulate, 41% of the production fraction with a particle size of 3.15 to 5 mm was obtained by sieving. Fertiliser composition in wt. %: water 0,49; S_total 12.04; S_water-soluble 12.01; Al_total 2.83; Al_water-soluble 0.049; N_am 18.26; N_NO₃⁻ 7.73; N_total 25.97. Molar ratio NH₄NO₃ : (NH₄)₂SO₄ was equal to 1.47. This fertilisers featured with the point strength: 79.7 N; caking property: 9 N, dust number: 2.6.

### Example 3:

The slurry for a nitrogen-sulphur fertiliser was prepared in a flow-through heated reactor with a stirrer; capacity: 3 1. After filling the reactor with ammonium nitrate solution and water, further ammonium nitrate, sulphuric acid, and a reaction mixture from decomposition of limestone and dolomite, so-called Ducamag, were started to be added gradually, containing (in % wt.): CaO 9.05, MgO 6.17, N_amon 1, N_NO3- 9.37, wherein steady state flow rates (in g/h) were: ammonium nitrate 98% - 425, Ducamag - 70, sulphuric acid 98% - 410, water - 490. Gaseous ammonia was added through a distributor so that the pH at the reactor output was 6.1 to 6.4. At 125 °C, a slurry containing 5.6% (wt.) of water was collected. The viscosity of this slurry was 260 mPa.s. The mixing power after the reactor run was stabilized was 16.2 kW/m³. A part of the accumulated slurry was dried, ground, sieved to a particle fraction of less than 2 mm in size, with about 1% (wt.) of particles of 3 mm, this fraction was used as a recycle for granulation. Granulation in a double-spindle granulator at temperature of 80 °C provided a wet granulate which was dried using nitrogen pre-heated to temperature of 160 °C. Sieving provided 39% of production fraction of 3.15 to 5 mm in size. The fertiliser composition was (in % wt.): water 0.64, solids 13.08, N_amon 18.74, N_NO₃⁻ 7.93, N_total 26.67. Molar ratio NH₄NO₃ : (NH₄)₂SO₄ was equal to 1.28. This fertilisers featured with the point strength: 71.4 N; caking property: 8 N, dust number: 2.7.

### Example 4:

The slurry for nitrogen-sulphur fertiliser containing aluminium was prepared in an "O"-type circulating reactor, which had the following main characteristics: height: 1300 mm, total reactor volume, including separation section: 6 dm³, absolute pressure at the reactor upward section bottom: 90 to 300 kPa. The housing of the upward section could be heated at varying intensities, which was important at the start, in particular. The reactor was supplemented with a device to absorb excess ammonia into a nitric acid solution. After the reactor was started with ammonia water, the mixture of ammonium nitrate - 1467 g/h as pure NH₄NO₃, alum - 1714 g/h as pure alum, and water - 400 g/h started to be dosed from the heated intermediate tank; and concentrated sulphur acid (98% wt. - 595) is dosed from other tank. Gaseous ammonia was added through a distributor so that the pH at the reactor output was 6.1 to 6.6. The pressure at the bottom of the upward section was 190 kPa (abs), the temperature at the head of the reactor was 130 °C. The mixing power after the reactor run was stabilized was 21.8 kW/m³. At its steady state, the reaction mixture, a slurry, was obtain, composition of which was (in % wt.): water 11.05, S_total 10.8; S_water-soluble 10.7; Al_total 2.51; Al_water-soluble 3 ppm by wt., N_amon 15.95, N_NO₃⁻ 6.5; N_total 22.45. The slurry viscosity was 400 mPa.s. A part of the accumulated slurry was dried, ground, sieved to a particle fraction of less than 2 mm in size, with about 3% (wt.) of particles of 3 mm, this fraction was used as a recycle for granulation. Granulation in a double-spindle granulator at temperature of 80 °C provided a wet granulate which was dried using air pre-heated to temperature of 300 °C. Sieving provided 37 % of production fraction of 3.15 to 5 mm in size. The composition fertiliser was (in % wt.): water 0.84, S_total 12.34, N_amon 18.22, N_NO₃⁻ 7.44, N_total 25.66, molar ratio of NH₄NO₃ : (NH₄)₂SO₄ was equal to 1,38. This fertilisers featured with the point strength: 64.2 N; caking property: 7 N, dust number: 2.6.

### Example 5:

The slurry for a nitrogen-sulphur fertilizer containing aluminium was prepared in the same reactor and by the same method as in the Example 4, except that a mixture formed from the components: NH4NO3 - 65% purity, remains - water, aluminium ammonium alum - 97% purity, aluminium sulphate - hexadecahydrate, 96% (wt.) purity, remains - water, was prepared in the intermediate tank at 90 °C: Reactor injection values in the steady state: 65% NH4NO3 - 1700, 97% ammonium aluminium alum - 1700, 96% aluminium sulphate hexadecahydrate - 350. From another tank, concentrated sulphuric acid 98% (wt.) - 370. Gaseous ammonia was added through a distributor so that the reactor output pH was 7 to 7.5. The temperature at the head of the reactor and the temperature of the slurry was 130 °C. At its steady state, the reaction mixture, a slurry, containing 10.6% (wt.) of water, was obtained. The viscosity of this slurry was 490 mPa.s. The mixing power after the reactor run was stabilized was 22.9 kW/m³. Part of the accumulated slurry was dried, ground, sieved and the particle fraction with a maximum size of 2 mm was used as a recycle for granulation. Granulation in a double-spindle blade granulator at temperature of 110 °C provided a wet granulate which was dried using hot air of temperature of 230 °C. From the obtained granulate, 43% of the production fraction with a particle size of 3.15 to 5 mm was obtained by sieving. Fertiliser composition in wt. %: water 0,90; S_total 13.20; S_water-soluble 13.18; Al_total 4.2; Al_water-soluble 8 ppm by wt.; N_amon 17.87; N_NO₃⁻ 6.33, N_total 24.20. Molar ratio NH₄NO₃ : (NH₄)₂SO₄ was equal to 1.1. This fertilisers featured with the point strength: 62.1 N; caking property: 9 N, dust number: 3.5. After application of the surface agent, the dust number decreased to 1.5.

### Example 6:

The slurry for the nitrogen-sulphur fertiliser was carried out in the same reactor as in the Example 4. After filling the reactor with ammonium nitrate solution and water, further ammonium nitrate, sulphuric acid, and a reaction mixture of decomposition of limestone and dolomite, so-called Ducamag, were started to be added gradually, containing (in % wt.): CaO 9.05, MgO 6.17, N_amon 1, 3- 9.37, wherein steady state flow rates (in g/h) were: ammonium nitrate 98% - 1130, Ducamag - 600, sulphuric acid 98% -1210, water - 1250. Gaseous ammonia was added through the distributor. The pressure on the reactor head was 51 kPa (abs). At temperature of 110 °C, the slurry was collected, having a composition (in % wt.): water 7.5, S_total: 11.77, N_amon: 16.32, N-NO₃⁻: 7.63, N_total: 24.0, and pH 6.5. The viscosity of this slurry was 160 mPa.s. The mixing power after the reactor run was stabilized was 12.6 kW/m³. A part of the accumulated slurry was dried, ground, sieved to a particle fraction of less than 2 mm in of diameter size, with about 1 % (wt.) of particles of 3 mm, this fraction was used as a recycle for granulation. Granulation in a double-spindle granulator at temperature of 90 °C provided a wet granulate which was dried using air heated to temperature of 180 °C. Sieving provided 44 % of production fraction of 3.15 to 5 mm in size. Fertiliser composition in wt. %: water 0,48; S_total 13.03; S_water-soluble 12.67; N_amon 17.55; N_NO₃⁻ 8.21; N_total 25.76; calcium as CaO 1.79; magnesium MgO as 1.22.¤ Molar ratio NH₄NO₃ : (NH₄)₂SO₄ was equal to 1.17. This fertilisers featured with the point strength: 72.7 N; caking property: 6 N, dust number: 2.3. After application of an agent for the surface finish, the dust number decreased to 1.8.

### Example 7:

The slurry for the nitrogen-sulphur fertiliser was carried out in the same reactor as in the Example 4. After filling the reactor with ammonium nitrate s solution and water, further ammonium nitrate, sulphuric acid, and a reaction mixture s decomposition of limestone and dolomite, so-called Ducamag, were started to be added gradually, containing (in % wt.): CaO 9.05, MgO 6.17, N_amon 1, N_NO3- 9.37, wherein steady state flow rates (in g/h) were: ammonium nitrate 98% - 1400, Ducamag - 150, sulphuric acid, 98% - 1290, water - 1100. Gaseous ammonia was added through the distributor. The pressure on the reactor head was 50 kPa (abs). The mixing power after the reactor run was stabilized was 23.2 kW/m³. At a temperature of 120 °C, the slurry was collected, having a composition (in % wt.): water 4.5, S_total: 12.46, N_amon: 18.20, N-NO3-: 7.66, N_total: 25.85, and pH 6.7. The viscosity of this slurry was 370 mPa.s. A part of the accumulated slurry was dried, ground, sieved to a particle fraction of less than 2 mm in size, with about 1% (wt.) of particles of 3 mm, this fraction was used as a recycle for granulation. Granulation in a double-spindle granulator at temperature of 70 °C provided a wet granulate which was dried using air heated to temperature of 180 °C. Sieving provided 39% of production fraction of 3.15 to 5 mm in size. Fertiliser composition in wt. %: water 0,17; S_total 13.03; S_water-soluble 13.03; N_amon 19.0; N_NO3- 8.02, N_total 27.02; calcium as CaO 0.45; magnesium MgO as 0.36. Molar ratio of NH4NO3 : (NH4)2SO4 is equal to 1.34. This fertilisers featured with the point strength: 61.3 N; caking property: 7 N, dust number: 2.3.

### Example 8:

The slurry for the nitrogen-sulphur fertiliser was carried out in the same reactor as in the Example 4. After filling the reactor with ammonium nitrate s solution and water, further ammonium nitrate, sulphuric acid, and a reaction mixture s decomposition of limestone and dolomite, so-called Ducamag, were started to be added gradually, containing (in % wt.): CaO 9.05, MgO 6.17, N_amon 1, N_NO3- 9.37, wherein steady state flow rates (in g/h) were: ammonium nitrate 98% - 1765, Ducamag of the above-mentioned composition - 150, sulphuric acid, 98% - 1240, water - 1100. Ammonia was added through a distributor so that the pH of output slurry was 7 to 7.5. In its steady state, the slurry with a composition (in % wt.): water 7.70, S_total 10.60, N_amon 17.37, N-NO3- 8.46, N_total 25.83, was obtained. The output temperature of the slurry was 130 °C. The slurry viscosity was 180 mPa.s. The mixing power after the reactor run was stabilized was 11.6 kW/m³. 5300 g of this slurry was mixed with 1000 g finely ground dolomite and limestone - MgO content: 18.4% (wt.), CaO content: 32.3% (wt.). The mixture was dried, ground, sieved and the particle fraction with a maximum size of 2 mm was used as a recycle for granulation. Granulation was carried out in a double-shaft blade granulator at 110 °C. Throughout the granulation, the slurry of the above-mentioned composition, recycle, and the mixture of ground dolomite and limestone of the above-mentioned composition were added, the ratio of ground dolomite to limestone being 1:5 in relation to the content of inorganic components in the slurry. The obtained wet granulate was dried using pre-heated air to 180 °C. From the obtained granulate, sieving provided 43% of the production fraction with a particle size of 3.15 to 5 mm. Fertiliser composition in wt. %: water 0.33; S_total 9.53; S_water-soluble 9.52; N_amon 15.62; N_NO3- 7.61, N_total 23.23; MgO 3.40; CaO 5.80; content of water-soluble magnesium as MgO 0.31% (wt.); content of water-soluble calcium as CaO 0.46% (wt.) Molar ration of NH4NO3 : (NH4)2SO4 is equal to 1.75. This fertilisers featured with the point strength: 82.7 N; caking property: 7 N, dust number: 2.4. After application of an agent for the surface finish, the dust number decreased to 1.6.

### Example 9:

Unlike in the Examples 4-8, the slurry for nitrogen-sulphur fertiliser containing aluminium was prepared out in a higher reactor. The reactor had the following main characteristics: height: 15 m, total reactor volume, including separation section: 0.22 m³, absolute pressure in the reactor upward section bottom: formed by hydrostatic pressure, change in momentum of the reaction mixture due to water vapour generating and thus increase in reaction mixture velocity and friction losses. The housing of the upward section could be heated at varying intensities, which was important at the start, in particular. The reactor was supplemented with an absorption column to absorb excess ammonia into a nitric acid solution and the NH₄NO₃ solution formed was mixed with fresh 96% NH₄NO₃. After the reactor was started with ammonia water, the mixture of fresh and absorption column-generated ammonium nitrate - 85% (wt.), 45 kg/h; alum - 97% (wt.), 45 kg/h; ammonium sulphate - 99% purity; and water remaining - 1 kg/h started to be dosed from the heated intermediate tank; and concentrated sulphur acid (98% wt. - 15 kg/h) was dosed from other tank. Gaseous ammonia was added through a distributor so that the pH at the reactor output was 6.7 to 7.2. The temperature at the head of the reactor was 130 °C. The mixing power after the reactor run was stabilized was 2.3 kW/m³. At its steady state, the reaction mixture, a slurry, was obtain, composition of which was (in % wt.): water 6.7, S_total 11:36, S_water-soluble 11.24, Al_total 2.61, Al_water-soluble 6 ppm by wt., N_amon 16.70, N_NO₃⁻ 6.78, N_total 23.49. The slurry viscosity was 370 mPa.s. A part of the accumulated slurry was dried, ground, sieved to a particle fraction of less than 2 mm in of diameter size, with about 3 % (wt.) of particles of 3 mm, this fraction was used as a recycle for granulation. Granulation in a double-spindle granulator at temperature of 110 °C provided a wet granulate which was dried using liquid gas mixture of natural gas and air of temperature of 320 °C. Sieving provided 43 % of production fraction of 3.15 to 5 mm in size. The fertiliser composition was (in % wt.): water 0.30, S_total 12.34; Al_total 2.90; Al_water-soluble 12 ppm by wt.; N-amon 18.33; N_NO₃⁻ 7.44, N_total 25.75, molar ratio of NH₄NO₃ : (NH₄)₂SO₄ was equal to 1,37. This fertilisers featured with the point strength: 67.2 N; caking property: 9 N, dust number: 2.7.

### Example 10:

The nitrogen-sulphur fertiliser was produced in a similar reactor as in the Example 9. After the reactor was started with ammonia water, the mixture of fresh and absorption column-generated ammonium nitrate - 75% (wt.), 53 kg/h, alum - 97% (wt.), 45 kg/h, and water - 45 kg/h started to be dosed from the heated intermediate tank was dosed from the intermediate tank; and concentrated sulphur acid (98% wt., 15 kg/h) and water (8 kg/h) were dosed from other tank. Gaseous ammonia was added through a distributor so that the pH at the reactor output was 6.7 to 7.2. The temperature at the head of the reactor was 120 °C. The mixing power after the reactor run was stabilized was 1.5 kW/m³. At its steady state, the reaction mixture, a slurry, was obtain, composition of which was (in % wt.): water 20.3, S_total 9.45, S_water-soluble 9.10, Al_total 2.21, Al_water-soluble 190 ppm by wt., N_amon 14.23, N_NO₃⁻ 5.93, N_total 20.16. The output reaction mixture viscosity was 70 mPa.s. This reaction mixture was thickened in a stirred vessel, into which ammonia was fed through the annular distributor from the bottom in such an amount that the output pH was 6.3-6.7. After thickening, the slurry had a water content of 6% (wt.). A part of such prepared slurry was dried, ground, sieved to a particle fraction of less than 2 mm in of diameter size, with about 3% (wt.) of particles of 3 mm, this fraction was used as a recycle for granulation. A mixture of ground limestone 99% and dolomite 1% was added also to the granulation in an amount of 6% (wt.) in relation to the content of inorganic components in the slurry. Granulation was carried out in a double-spindle blade granulator at 110 °C. A wet granulate was obtained that was dried using combustion gases mixture of natural gas and air of temperature of 320 °C. Sieving provided 41 % of production fraction of 3.15 to 5 mm in size. The fertiliser composition was (in % wt.): water 0.40, S_total 11.40, S_water-soluble 11.29; Al_total 2.90; Al_water-soluble 12 ppm by wt.; N-amon 17.16; N_NO₃⁻ 7.21, N_total 24.37, molar ratio of NH₄NO₃ : (NH₄)₂SO₄ was equal to 1.45. Calcium content (as CaO) was 3.2% (wt.), magnesium content (as MgO) was 0.02% (wt.) This fertilisers featured with the point strength: 61.3 N; caking property: 7 N, dust number: 2.9.

Fig. 1 shows the equipment for the nitrogen-sulphur granular fertiliser continuous formulation. In the preparation process, ammonium nitrate of water content of 5 to 40%, is mixed with other components first in the mixing tank 1; with aluminium ammonium sulphate ((NH₄)Al(SO₄)₂.12H₂O) in the case of fertiliser production with its use, optionally with aluminium sulphate, reaction mixture of the decomposition of limestone, dolomite or magnesite, sulphuric acid and other aqueous solutions and suspensions useful for fertiliser production according to the present invention, especially ammonium, calcium, magnesium, ferric, and zinc nitrates. Flow of aqueous ammonium nitrate solution that is generated when purification of the steam-gas - waste flow from the reactor 2 is optional, but efficient in terms of technology. This solution may contain also nitric acid, which is used to purify the waste flow. Optionally, sulphuric acid is fed also to the mixing tank 1. However, this option is not suitable if the "other flows" show higher concentrations of calcium cations, as hydrated calcium sulphate sediments may be formed. It is more appropriate to inject sulphuric acid together with other flows into the mixing tank 1. From the mixing tank 1, the mixture is injected in the required flow into the reactor 2, into which the sulphuric acid (H₂SO₄), the water, and optionally ammonium sulphate enter; and ammonia is dosed through the distributor 3 located at the bottom of the reactor 2. Regardless of the method of mixing, the maintaining the pH of the reaction mixture in the reactor 2 and, in particular, at the output at a value of 6.1 to 7.5 is a precondition for successful implementation of the process. Another condition for successful and economically advantageous implementation of the process is to maintain such a pressure with respect to the water content of the reaction mixture so that the temperature of the reaction mixture at the output of the reactor 2 is in the range of 100 to 130 C. This temperature range guarantees a good economics of granulation, there is no need for a large amount of cold recycle, and, in particular, 2DASA (2NH₄NO₃.(NH₄)₂SO₄) is formed in more significant amount from the slurry of temperature under 130 °C compared to temperature over 130 °C, in terms of thermodynamic equilibrium. Optimally, the slurry temperatures are 105 to 115 °C, at water content of 5 to 10% (wt.) and molar ratio of (NH₄NO₃) to ((NH₄)₂SO₄) 1.3 to 1.45. Depending on the demand for the resulting water content, the pressure on the reactor 2 head is 30 to 110 kPa, optimally 40 to 80 kPa.

In the reactor 2, the reaction heat produced by neutralizing sulphuric acid and nitric acid, in the case of its residual concentration from purification of the waste steam-gas mixture, is removed by evaporation of the water from the reaction mixture, thereby cooling, generating the waste steam-gas flow and reducing the water content in the slurry. The intensive mixing of the reaction mixture in the reactor 2 is achieved by forced mixing 4: (i) using a propeller stirrer, (ii) a combination of propeller and turbine stirrer, (iii) in an O-shaped circulating reactor with an axial pump, (iv) in a circulating reactor with external circulation using a centrifugal pump. All variants require a phase separator, which may be a separate vessel with a demister, or only a demister above the slurry level. The cylindrical reactor 2 processes are preferred particularly, either as a pair of cylinders, i.e., an O-shaped reactor with an axial pump in the bottom connection section, or with an external circulation using a centrifugal pump. Practically, the above-mentioned variant generates also an "O"-type reactor 2, where the downstream section is formed by a supply line to the pump. For all the variants described, a high cylindrical reactor 2 of a height of at least 5 m is advantageous, being constructively and technologically optimal of 10 to 20 m. Due to the hydrostatic pressure and the change in the kinetic energy of the reaction mixture - the portion of steam is increased during the neutralization by evaporation of water, thus for a constant mass flow the velocity, thus momentum and the kinetic energy in the direction from the bottom to the top of the reactor 2 are increased, the pressure of the reactor 2 bottom is significantly higher than on its head. This allows to have sufficient pressure on base for good absorption of ammonia even under negative pressure at the reactor 2 head. Another variant of the reactor 2 layout is a combination of reaction section mixed intensively, throttle, separator and slurry circulation by a centrifugal pump from the separator to the bottom reaction section. This solution is less advantageous for high-capacity production with a capacity of more than 100 tonnes of slurry per hour.

As a result of the pressure in the vicinity of the ammonia distributor 3, which is given by the hydrostatic pressure of the reaction mixture column and the pressure above the level, its high degree of absorption with the efficiency of 95 to 98% is ensured. Unreacted ammonia, together with water vapour, is fed to the exhaust purifier 5 represented by an absorption column, venturi scrubber or other type of device, where ammonia is absorbed into an aqueous solution of nitric acid and ammonium nitrate generated. The vapours from the purifier 5 are fed into a vacuum pump which generates the necessary vacuum in the purifier 5 and the reactor 2 head. The resulting ammonium nitrate solution can be stored or directly fed into the mixing tank 1, as indicated in Figure 1.

When working with diluted solutions, suspensions, and water content of the slurry is higher than 10% (wt.), a portion flow from the reactor 2 or the entire flow is fed to an evaporator - thickener 6, into which small amount of ammonia is fed as well in order to maintain a pH in the range of 6.1 to 7.5. The amount of evaporated water must be such that the slurry at the granulator 7 input has a water content of 10% (wt.) as maximum, optimally 5 to 8% (wt.) and conditions, working pressure in the evaporator ensured temperature of 130 °C as maximum, optimally 110 to 115 °C.

The slurry is injected, together with the recycle, into the granulator 7, which may be fluidized, drum, or blade double-shaft as the most advantageous. The granulation is carried out at temperature of 70 to 110 °C, preferably 80 to 100 °C, the required temperature being reached by the temperature and the amount of recycle, and the composition of recycle particles is in the range of 90 to 110% of the nitrogen, sulphur and aluminium components. Preferably, the recycle forms a polydispersive particle system with a D50 of at most 2 mm and less than 1% (wt.) of particles larger than 3 mm.

The resulting granulate is dried in the drying device 8 by a mixture of gases containing carbon dioxide, oxygen, nitrogen and water vapour, the gas mixture temperature at the drying device 8 input being 160 °C as minimum and 320 °C as maximum. The granulate can be dried by a mixture of heated air, the air being heated indirectly in heat exchangers, or the mixture of the drying gas is prepared by hydrocarbon combustion, preferably natural gas combustion, and the temperature is adjusted by dilution with air.

The dried granulate is screened in the screener 9 into three parts: production - size of 2 to 5 mm, undersize - less than 2 mm, and oversize particles - size of 5 mm or more.

The oversize fraction is crushed/milled in the mill 10 and, together with the undersize fraction, is returned through the tank 11 to the granulator as a recycle.

The production fraction is cooled and surface-treated to reduce caking property and dustiness.

### Industrial Applicability

Nitrogen-sulphur granular fertiliser prepared from aluminium sulphate, ammonium aluminium alum, ammonium nitrate, ammonia and optionally with addition of ammonium sulphate and sulphuric acid is suitable for fertilization of crops requiring increased sulphur supply in the case of soils, which are poor in water-soluble sulphur compounds.

## Claims

1. A method of nitrogen-sulphur granular fertilizer formulation from ammonium nitrate, ammonium sulphate and/or aluminium ammonium sulphate and/or aluminium sulphate, sulphuric acid, and ammonia, wherein a slurry is formed first from the mentioned components and, then, this slurry is granulated with a recycle and other inorganic components directly and/or after thickening at a temperature of 70 to 130 C, ***characterized in that*** the slurry is prepared in a continuous forced-mixing reactor of power of 1.5 to 25 kW/m³, wherein reactor output pH is 6.1 to 7.5 and the reactor output ratio of ammonium nitrate to ammonium sulphate is 1.1 to 1.75.

2. The method according to the claim 1, ***characterized in that*** ammonia is dosed in excess and the unreacted ammonia, together with water vapour, is passed to an absorption column where it reacts with nitric acid and the resulting ammonium nitrate solution is fed as a feed to the reactor.

3. The method according to claim 1 or 2, ***characterized in that*** the slurry in the reactor output is at temperature of 100 to 130 °C.

4. The method according to any of the claims 1 to 3, ***characterized in that*** the slurry in the reactor output is at pH of 6.1 to 6.9.

5. The method according to any of the claims 1 to 4, ***characterized in that*** the slurry in the reactor output has water content of 4.5 to 20% (wt.).

6. The method according to any of the claims 1 to 5, ***characterized in that*** a decomposition mixture formed by the reaction of nitric acid and magnesite and/or dolomite is used to prepare the slurry, wherein the weight portion of calcium and magnesium, expressed as CaO and MgO, is 3% (wt.) maximally in relation to the total content of inorganic compounds at the reactor output.

7. The method according to any of the claims 1 to 6, ***characterized in that*** the reaction mixture, which at the reactor output contains more than 9% (wt.) water, is thickened to a water content of 4.5 to 9% (wt.) by adding gaseous ammonia to the thickening device so that the slurry shows pH of 6.1 to 7.5 after thickening.

8. The method according to any of the claims 1 to 7, ***characterized in that*** the granulation is carried out at an output temperature of 80 to 100 °C, the composition of the recycled particles being in the range of 90 to 110% of the nitrogen, sulphur and other inorganic components in the raw materials and the product formed by the reaction of the individual components in the raw materials fed.

9. The method according to any of the claims 1 to 8, ***characterized in that*** ground dolomite and/or limestone is added to the granulation in addition to the recycle and slurry, the weight ratio of dolomite to limestone being 1:99 to 99:1, in maximum amount of 20% (wt.) in relation to the inorganic component content in the slurry.

10. The method according to any one of the claims 1 to 9, ***characterized in that*** granulate is dried with a mixture of heated air of temperature of 160 to 320 °C.

11. The method according to any of the claims 1 to 10 ***characterized in that*** the granulate is dried by a mixture of gases prepared by hydrocarbon combustion, preferably natural gas, and the temperature is adjusted by dilution with air so that the input temperature of the gas mixture for drying is 240 to 320 °C.

12. The method according to the claims 1 to 11, ***characterized in that*** aluminium salts are used to achieve a water-soluble aluminium content in the fertiliser in an amount of less than 0.05% (wt.).

13. An apparatus for performing the method according to any one of the preceding claims, comprising a mixing tank (1), to which a reactor (2) is connected, followed by a thickener (6), ***characterized in that*** the reactor (2) is provided with a propeller and/or turbine stirrer.

14. The apparatus according to the claim 12, ***characterized in that*** the reactor (2) is an "O" circulating reactor with forced mixing (4) by means of an axial pump, the raw material input being at the beginning of the upstream section of the reactor (2) and the slurry output being at the downstream section of the reactor(2).

15. The apparatus according to the claim 13 or 14, ***characterized in that*** the reactor (2) is provided with a centrifugal or screw pump for forced mixing by external recirculation.
